(19) Europäisches Patentamt
European Patent Office
Office européen des brevets

(11) EP 0 547 751 B1

(12) EUROPEAN PATENT SPECIFICATION

(45) Date of publication and mention
of the grant of the patent:
13.08.1997 Bulletin 1997/33

(51) Int Cl.⁶: **G01F 1/60**, G01F 1/58,
G01F 1/00, G01F 25/00,
G01F 23/26

(21) Application number: 92309900.6

(22) Date of filing: 29.10.1992

(54) **Electromagnetic flowmeter**

Elektromagnetischer Durchflussmesser

Débimètre électromagnétique

(84) Designated Contracting States:
CH DE FR GB LI

(30) Priority: 18.12.1991 JP 335050/91

(43) Date of publication of application:
23.06.1993 Bulletin 1993/25

(73) Proprietor: Aichi Tokei Denki Co., Ltd.
Nagoya-shi Aichi-Ken 456-91 (JP)

(72) Inventor: Yoshida, Yutaka
Kaniecho, Ama-gun, Aichi-ken (JP)

(74) Representative:
Blanco White, Henry Nicholas et al
ABEL & IMRAY
Northumberland House
303-306 High Holborn
London WC1V 7LH (GB)

(56) References cited:
EP-A- 0 555 493        EP-A- 0 557 529
DE-A- 2 063 792        DE-A- 2 856 240
DE-U- 9 103 046        FR-A- 2 068 824
US-A- 3 991 612

• PATENT ABSTRACTS OF JAPAN vol. 9, no. 109
(P-355)14 May 1985 & JP-A-59 230 115
(YAMATAKE HONEYWELL)
• PATENT ABSTRACTS OF JAPAN vol. 14, no. 76
(P-1005) 13 February 1990 & JP-A-1 292 214
(AICHI TOKEI)

**Description**

BACKGROUND OF THE INVENTION

The present invention relates to electromagnetic flowmeters and more particularly to an electromagnetic flowmeter which measures the flow of a fluid which flows through a conduit, whether or not the conduit is full with the fluid.

Conventionally, an electromagnetic flowmeter is known which measures the flow of a fluid which flows through a conduit in a state where the conduit is full with a fluid. Murase and others have proposed an electromagnetic flowmeter which is composed of an energizing coil disposed above a conduit, a pair of electrodes disposed below the conduit and circuitry which controls those coils (JP-A-01-292214). According to this flowmeter, even if the conduit is not full with a test fluid, the measurement of the flow of the fluid is possible theoretically.

Watanabe and others have proposed a detector which detects whether a conduit is full with a flowing fluid or not, the detector comprising a pair of coils each disposed above and below a conduit, a unit for selecting and driving one of these coils, a pair of electrodes disposed on the corresponding sides of the conduit, and circuitry which selects energization of a coil, as disclosed in JP-A-59-230115, on which the preambles of claims 1 & 7 are based.

EP-A 0 557 529, which was published after the filing date of the present application, describes in summary the disclosure of an unpublished earlier Japanese application from which the present application indirectly derives.

DE-A 28 56 240 discloses a flow sensor for an incompletely filled conduit in which the level of the fluid in the conduit is determined by means of an inductive loop including the surface of the liquid, and it is therefore necessary for the electrodes to extend vertically over the expected range of variation of the liquid level.

However, although both of the two citations last mentioned have drawings showing electrodes that extend further below the axis than above, neither discloses any specific central angle for either the upper or the lower part of the electrodes.

It is an object of the present invention to provide an electromagnetic flowmeter which is capable of measuring the flow of a fluid in a conduit, whether or not the conduit is full with the fluid.

It is another object of the present invention to provide an electromagnetic flowmeter with high accuracy.

It is a further object of the present invention to provide an electromagnetic flowmeter which is capable of measuring the flow of a fluid flowing through a conduit whose gradient is known.

It is a further object of the present invention to provide a novel device which measures the level of a fluid which flows through a conduit.

It is a further object of the present invention to provide an electromagnetic flowmeter which is capable of measuring the flow of a fluid through a conduit when the level is known and the gradient of the conduit is unknown.

It is a further object of the present invention to provide a method of achieving at least one of the above objects.

The invention provides an electromagnetic flow sensor for a flowmeter for measuring the flow rate of a measurement fluid, comprising a measuring conduit of substantially circular cross-section; an upper coil disposed above the measuring conduit; a lower coil disposed below the measuring conduit; means for selectively energising one of said upper and lower coils; sensor means comprising a pair of electrodes attached to the conduit wall and providing a respective electrical signal OA or OB representative of the voltage induced as a result of fluid flowing through the magnetic field produced by said upper coil or said lower coil, respectively, when energised, each of which electrodes comprises a first portion extending upward from the horizontal axis of conduit and a second portion extending downward from the horizontal axis; characterised in that the said second portion is longer than the first portion; and the angle subtended by said first portion at the central axis of the conduit is 30 to 40 degrees.

The invention also provides an electromagnetic flowmeter which includes a flow sensor according to the invention.

The invention further provides a method of measuring the flow rate of a measurement fluid flowing through a measuring conduit having a substantially circular cross-section, comprising: producing a magnetic field by selectively energising one of an upper coil disposed above the measuring conduit and a lower coil disposed below the measuring conduit; obtaining with sensor means comprising a pair of electrodes attached to the conduit wall a respective electrical measurement signal OA or OB representative of the voltage induced as a result of fluid flowing through the magnetic field produced by said upper coil or said lower coil, respectively, when energised, each of which electrodes comprises a first portion extending upward from the horizontal axis of conduit and a second portion extending downward from the horizontal axis; characterised by using electrodes with the said second portion longer than the first portion; the angle subtended at the central axis of the conduit by said first portion of which is 30 to 40 degrees.

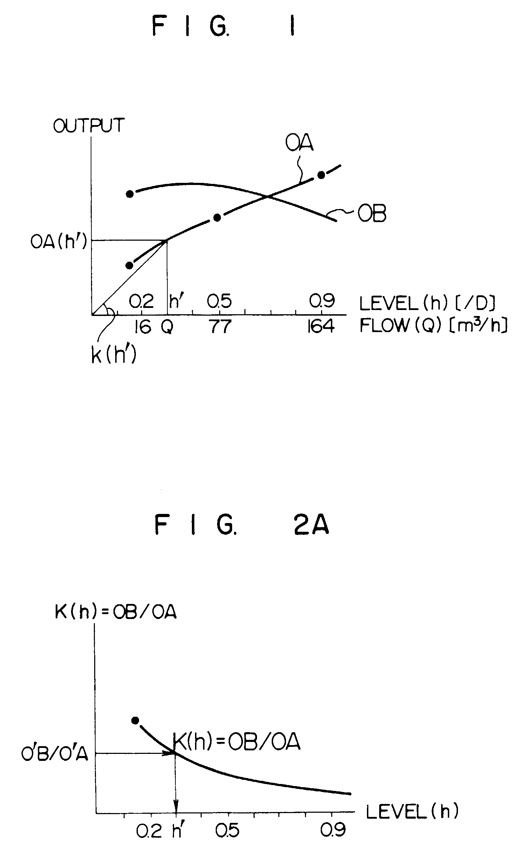

Fig. 1 shows the relationship between a flow Q and the output from the sensor disposed in a conduit having a known gradient and a known diameter or a cross-sectional configuration. A curve OA in Fig. 1 represents a relationship (first relationship) obtained when the upper coil is energized while a curve OB represents a relationship (second relationship) obtained when the lower coil is energized. Since the gradient and diameter of the conduit is known, the level h of the fluid is uniquely determined for the flow Q. The horizontal axis of Fig. 1 is scaled with both flow Q and level h of the fluid. The level is indicated as a percentage of the level to the diameter D of the conduit.

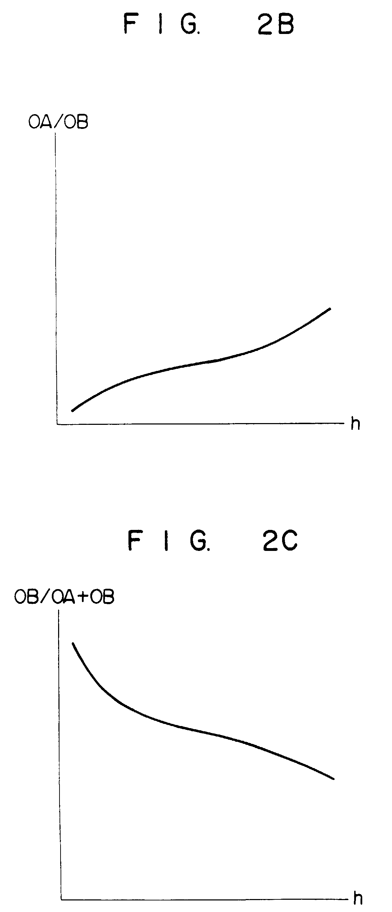

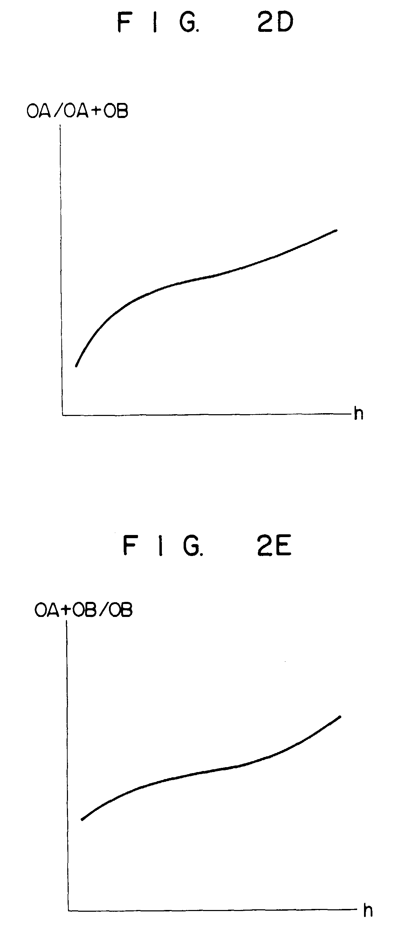

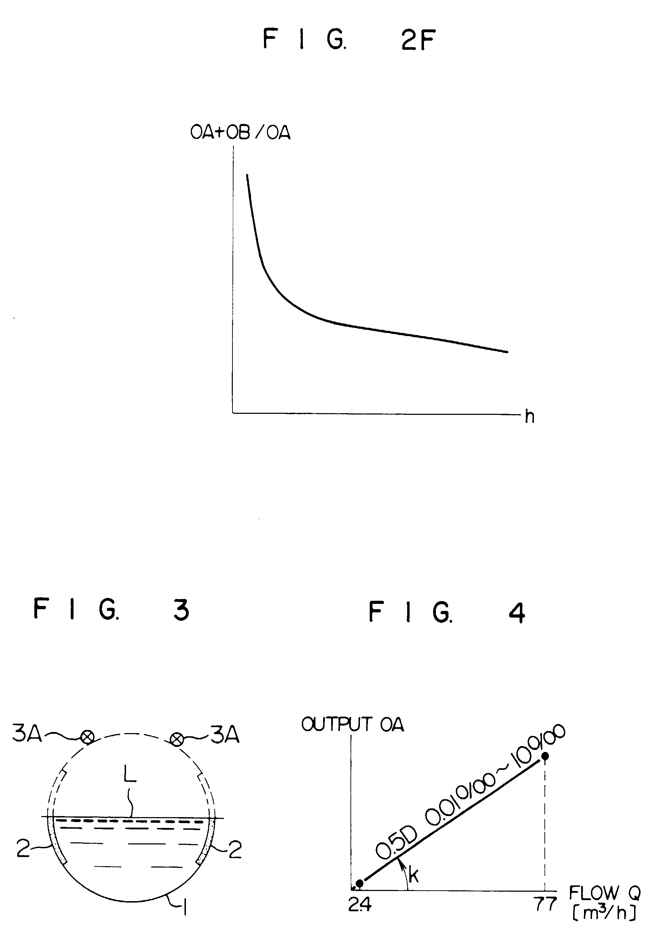

Fig. 2 represents a relationship (fourth relationship) between a ratio K(h) (third relationship) of curve OB to curve OA and level h.

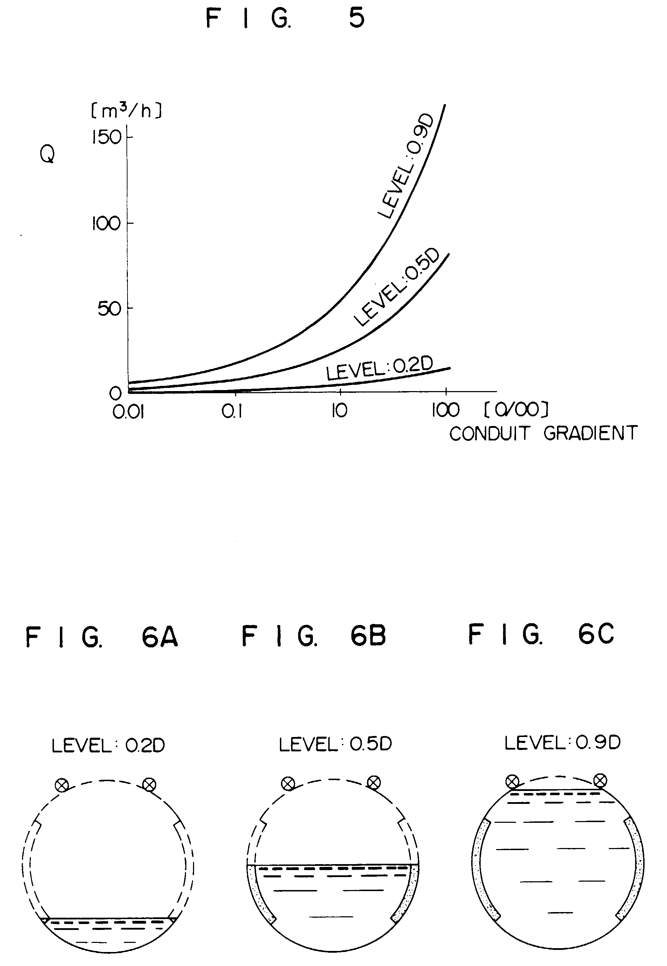

As shown in Fig. 3, if a fluid which flows through a flow sensor of an electromagnetic flowmeter having a pair of electrodes 2 disposed across a circular cross-sectional conduit 1 and a saddle-shaped energizing coil 3A disposed on top of conduit 1 is maintained at a level (0.5D) of half the diameter (inner diameter) D of the conduit 1, it is considered that the flowmeter is the same in measuring conditions as a full-fluid flowmeter with a flow path having a cross-section equal to the lower half of the conduit. Therefore, the output OA from the electromagnetic flowmeter is represented by a straight line proportional to the flow, as shown in Fig. 4. The gradient k of this line represents the sensitivity of a virtual full-fluid electromagnetic flowmeter. The sensitivity k is k = OA/Q where Q is the flow. The sensitivity is normally constant in the full-fluid electromagnetic flowmeter, so that the sensitivity of the virtual full-fluid flowmeter is also constant as long as the level h is maintained constant. That is, the sensitivity k is a function of level h.

In this case, a magnetic flux density distribution BA due to upper coil 3A is considered to be constant. Generally, in a full-fluid electromagnetic flowmeter, its output is represented by the product of a magnetic flux density, the flow and the distance between the electrodes. Therefore, also in this case, the sensitivity k can be expressed by a function k(BA, h) where BA is a magnetic flux density distribution, and h is the level of the fluid when the conduit cross-section configuration is strictly constant.

Similarly, a sensitivity k' = OB/Q can be represented by a function k'(BB, h) where BB is a magnetic flux density distribution due to the coil disposed below the conduit and the level h of the fluid.

Thus, the outputs OA and OB are represented as:

$$OA = k(BA, h)\, Q \qquad (1)$$

$$OB = k'(BB, h)\, Q \qquad (2).$$

Taking a ratio of expression (2) to expression (1),

$$OB/OA = k'(BB, h)Q/k(BA, h)Q$$

$$= k'(BB, h)/k(BA, h) \qquad (3).$$

Magnetic flux density distributions BA and BB are fixed density distributions obtained by energizing coils 3A and 3B, so that k'(BB, h)/k(BA, h) can be handled as a function of only level h. By putting this ratio as K(h), expression (3) can be rewritten as follows:

$$OB/OA = K(h) \qquad (4).$$

This relationship is shown in Fig. 2A. The relationship of expression (4) involves no gradient of the conduit.

Therefore, (1) if the relationship shown in Fig. 2A or the relationship of Fig. 4 is beforehand obtained for a conduit with a gradient; (2) the outputs OA' and OB' are measured for a measured conduit with the same cross-sectional configuration; (3) the ratio OB'/OA' is calculated; and (4) the relationship in Fig. 2A is referred to, the level is determined even if the gradient of the measured conduit is unknown.

While in the above the relationship OB/OA is used, OA/OB (Fig. 2B), OB/(OA + OB) (Fig. 2C), OA/(OA + OB) (Fig. 2D), (OA + OB)/OB (Fig. 2E) and (OA + OB)/OA (Fig. 2F) may be similarly used to determine the level of the fluid because they are each a function of level h alone.

Fig. 5 shows the relationship between each of gradients of conduits and flow Q at a respective one of various levels. If conduits whose flows are to be measured have the same cross-sectional configuration and their gradients are known, the flows of fluids flowing through the conduits are obtained by specifying the levels of the fluids using the above method.

The flow is obtained by storing data on the relationships of Fig. 5 in a memory of a computer system and inputting a level and a gradient into the system.

If the gradient of a measured conduit is unknown, a method of obtaining a flow will be described below.

As described above, assume that the level takes three values, for example, of 0.2D, 0.5D and 0.9D. The measurement is equal to measurement using full-fluid electromagnetic flowmeters having different cross-sectional configurations such as those shown in Figs. 6A, 6B and 6C.

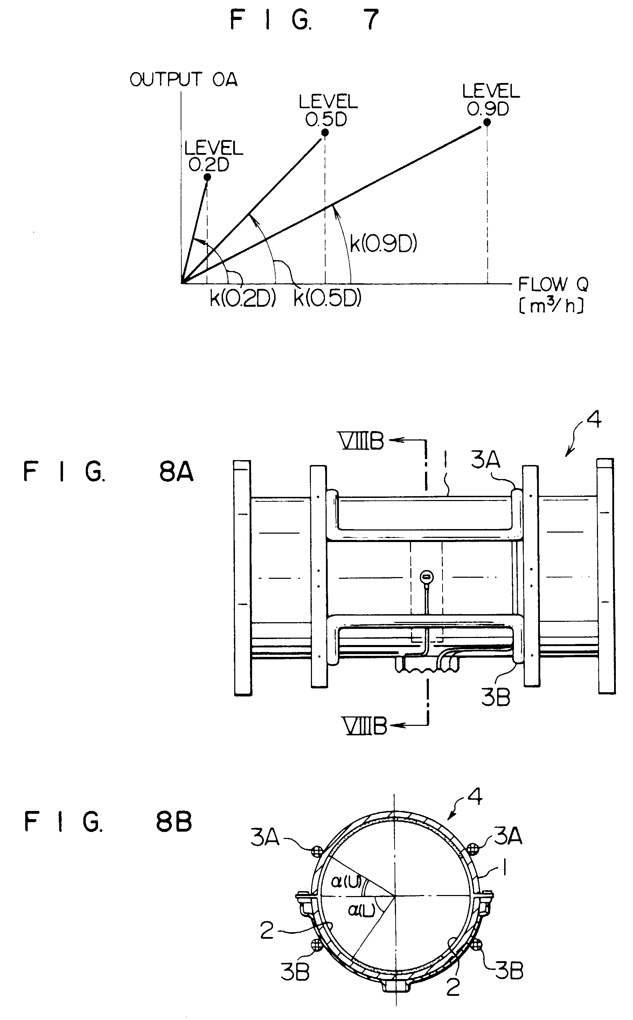

If the cross-sectional configuration changes, the sensitivity k also changes. In other words, if the level is constant, the sensitivity k = OA/Q is also constant (see Fig. 7).

If the level is constant in a non-full fluid state, there is a constant relationship between flow Q and the gradient of the conduit. That is, if the gradient increases, the flow also increases. Therefore, if the level is constant, an unknown gradient is involved in an unknown flow to be measured.

If the level h' of a measured conduit is calculated from the relationship of Fig. 2A by referring to the relationships of Figs. 1 and 2A, a flow Q in a reference conduit,. whose gradient is already known, used to obtain the relationship of Figs. 1 and 2A at the level h' is obtained because the flow and level are in a one-to-one relationship in the reference conduit. An output OA(h') in the reference conduit at level h' or at flow Q is determined from the curve OA of Fig. 1.

As described above, if the level is the same, the sensitivity does not change, so that the following relationship holds between the reference and measured conduits:

$$k(h') = OA(h')/Q = OA'/Q' \tag{5}$$

where OA' is an output from the measured conduit and Q' is the flow to be obtained. Therefore, the measured flow Q' is determined from

$$Q' = OA' \cdot Q/OA (h') \tag{6}.$$

When flow Q' is calculated in this way, the curve OA of Fig. 1 (first relationship) and the relationship in Fig. 2A (fourth relationship) are stored as data in the memory of the computer system. While the relationship for the curve OA is used in the above example when the sensitivity k(h') is calculated, the relationship for the curve OB or the curve OA + OB may be used.

If the level is obtained from Fig. 7, the sensitivity is obtained. Therefore, the measured flow Q' is obtained from

$$Q' = k \cdot OA' \tag{7}$$

on the basis of the output OA' from the appropriate conduit.

In this case, the level may be used in any method. For example, a dam expression known conventionally may be used.

BRIEF DESCRIPTION OF THE DRAWINGS

These and other objects and technical advantages of the present invention will be readily apparent from the following description of the preferred embodiment exemplary embodiments of the present invention in conjunction with the accompanying drawings in which:

Fig. 1 shows the relationship between the output of a sensor and a flow obtained when the upper and lower coils on a reference conduit are energized.

Fig. 2A-2F show the relationship between level and ratio of curves OB to OA in Fig. 1.

Fig. 3 schematically illustrates the principles of a flow sensor in the present invention.

Fig. 4 is a graph of the relationship between a flow and an output of the flow sensor of Fig. 3 when the level is 0.5D.

Fig. 5 shows the relationship between level, conduit gradient and flow.

Fig. 6A-6C are views corresponding to Fig. 3 and show three cases where the corresponding revels are different one from the other.

Fig. 7 is a graph of the relationship between flow and output at each of levels and corresponding to Fig. 6.

Fig. 8A is a front view of an embodiment of a flow sensor in the present invention; and Fig. 8B is a cross-sectional view taken along the line A-A of Fig. 8A.

Fig. 9 is a block diagram indicative of one embodiment of an electromagnetic flowmeter according to the present invention.

Fig. 10 is a timing chart indicative of the operation of the electromagnetic flowmeter.

Fig. 11 schematically illustrates an experimental device used for examining the accuracy of a flow measuring method according to the present invention.

Fig. 12 is a diagram indicative of one example of the relationship between actual flow Q and outputs OA, OB of the flow sensor in the present invention.

Fig. 13 is a graph of the relation between actual flow Q and ratio OB/OA calculated from data of fig. 12.

Fig. 14 is a graph of output curves corresponding to Fig. 15 obtained when the gradient of a conduit is changed.

Fig. 15 shows a device difference characteristic curve on the embodiment of the present invention.

Fig. 16 is a flowchart indicative of the operation of a CPU in the embodiment.

Fig. 17 is a block diagram indicative of a second embodiment of an electromagnetic flowmeter according to the present invention.

Fig. 18 is a timing chart for the operation of the embodiment of Fig. 17.

Fig. 19 is a flowchart indicative of the operation of the CPU of the Fig. 17 embodiment.

Fig. 20 illustrates the coordinates of correction reference data.

Fig. 21 illustrates the coordinates of correction reference data.

Fig. 22 illustrates recording of correction reference data on a ROM.

Fig. 23A is a flowchart indicative of the process for obtaining a flow from an output ratio; and Fig. 23B shows linear interpolation.

Fig. 24 is the basic flowchart indicative of the procedures of correction according to the present invention.

## DETAILED DESCRIPTION OF THE PREFERRED EMBODIMENT

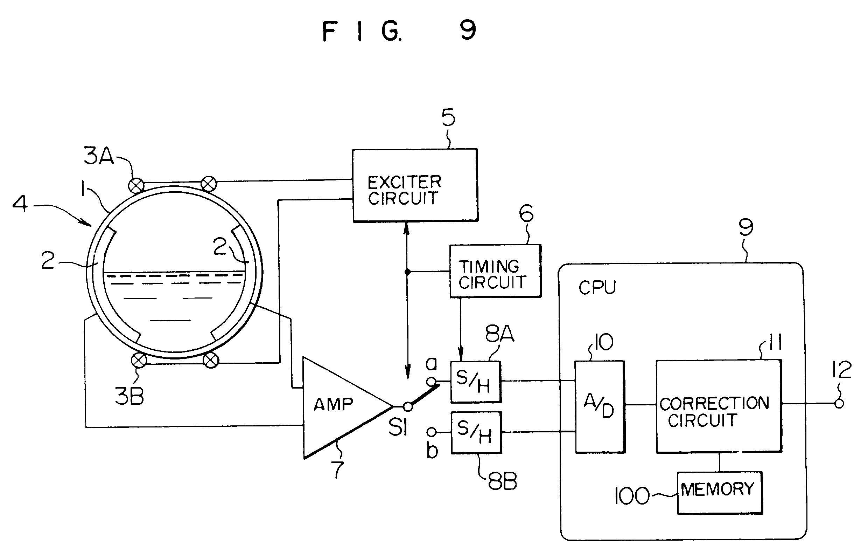

Referring to Figs. 8 and 9, reference numeral 1 denotes a measured circular cross-sectional conduit through which a measured fluid flows; 2, a pair of electrodes provided at positions symmetrical around a vertical line passing through an axis of the conduit 1; 3A, 3B, a first and a second energizing coil which generate different magnetic flux density distributions BA and BB at different intervals of time; and 4, a flow sensor having such structure.

The electrodes 2 are asymmetrical around a horizontal axis of the conduit 1. The electrode portions positioned below the horizontal axis are preferably as long as possible in the circumferentially downward direction in order to detect a lower level of the fluid as will be seen in Fig. 6A. However, if those portions are excessively downward long, the electrodes 2 may be short-circuited. Therefore, the central angle $\alpha(L)$ subtending the lower portion is preferably 50-60 degrees. In the embodiment, $\alpha(L) = 55$ degrees.

The central angle $\alpha(U)$ subtending the electrode portions positioned above the horizontal axis is preferably 30-40 degrees. The present inventor found that when that central angle was used, the curve OA of Fig. 1 or 12 was close to a straight line. As the curve OA is closer to a straight line, the sensitivity k changes more linearly in response to a change in the level or flow of the fluid. In the embodiment, $\alpha(U) = 35$ degrees.

An energizing circuit 5 alternately energizes a first and second energizing coils 3A and 3B in accordance with a signal from a timing circuit 6. Reference numeral 7 denotes an amplifier which amplifies and outputs a voltage induced across the electrodes 2; S1, a changeover switch which is switched in accordance with a signal from the timing circuit 6 synchronously with the timing signal of energization of the energizing coils 3A and 3B. When the first energizing coil 3A is energized, the switch S1 is switched to a contact a while when the second energizing coil 3B is energized, it is switched to a contact b.

Reference characters 8A and 8B denote a first and a second sample and hold circuit which perform a sample and hold operation by receiving a signal through the contacts a and b; 9, CPU; 10, an A/D converter which converts an analog signal from each of sample and hold circuits 8A, 8B to a digital signal; 11, a correction circuit which stores a program for the above correction; and 12, an output terminal which outputs a flow signal Q' as the result of the correction.

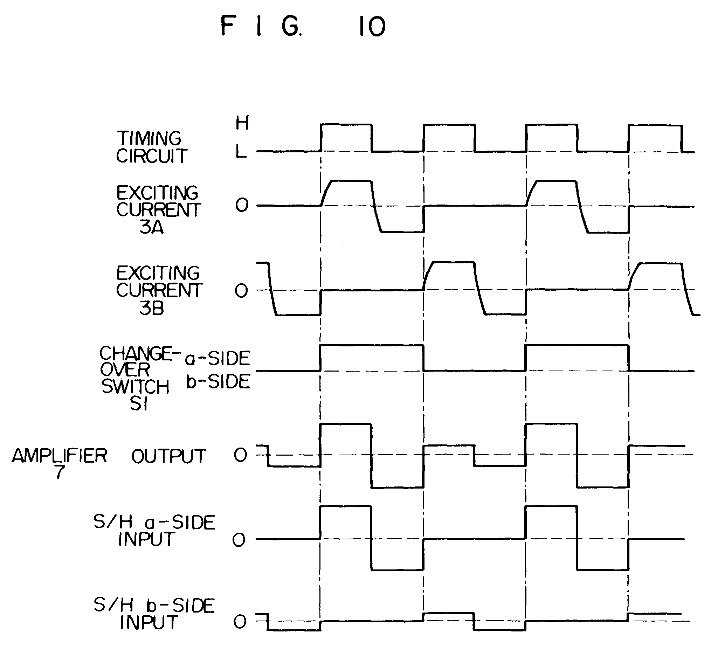

Fig. 10 is a timing chart for the electromagnetic flowmeter of Fig. 9 which shows a signal from the timing circuit 6, energizing currents flowing through the first and second energizing coils 3A and 3B, the operation of the changeover switch S1, the output from amplifier 7, and inputs to sample and hold circuits 8A and 8B.

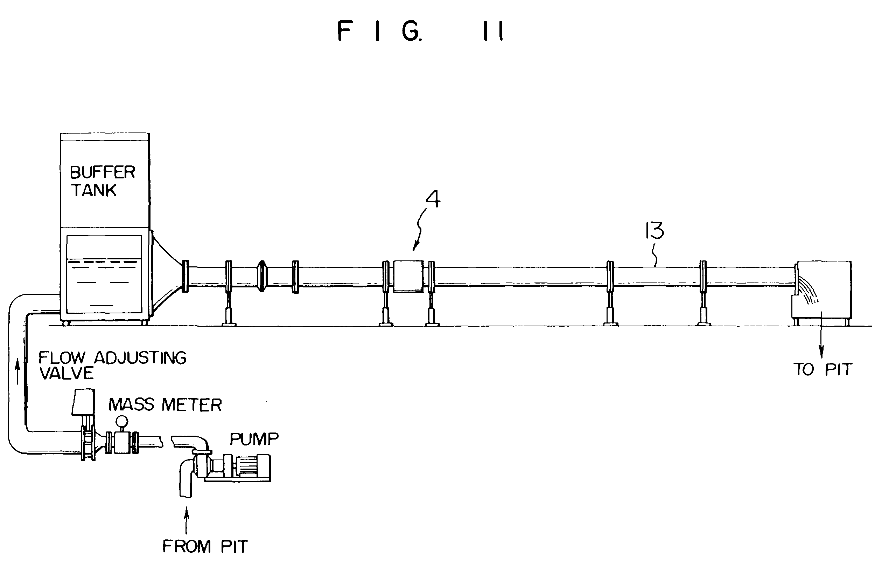

Fig. 11 shows the overall device used for an experiment to examine the accuracy of the inventive measuring method and having the flow sensor 4 of Figs. 8 and 9 attached to a vinyl chloride tube 13 having an inner diameter of 200mm and a length of about 8m. The gradient of this tube is fixed at 2/1000. In this case, the relationship between the output OA of the electromagnetic flowmeter and the actual flow Q measured using the first energizing coil 3A is shown by a curve OA in Fig. 12. The result of the measurement obtained by using the second energizing coil 3B at the same gradient of the conduit used is shown by a curve OB.

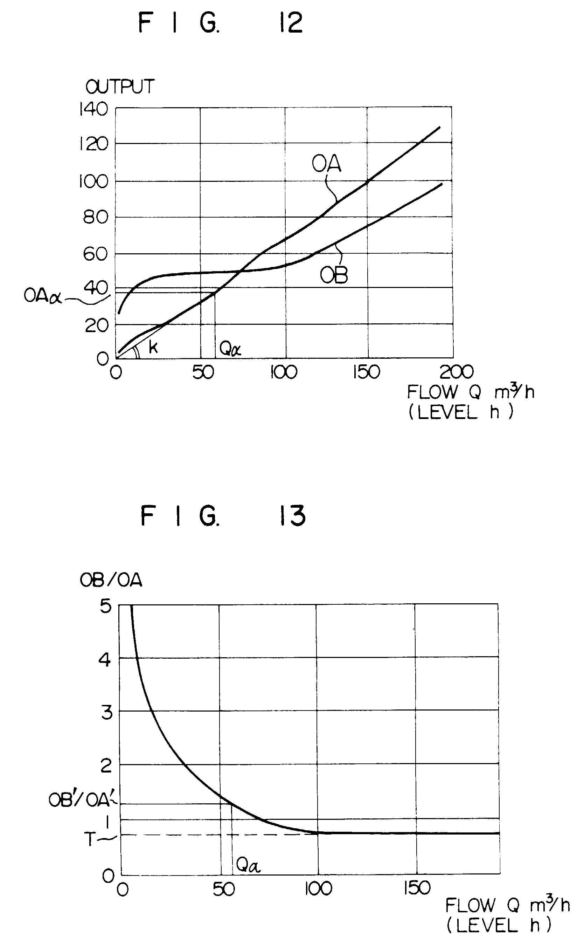

Fig. 13 shows a ratio OB/OA obtained from both data OA and OB of Fig. 12. While in Fig. 13 the ratio OB/OA is a minimum constant value when the flow Q is substantially larger than 100 [$m^3$/h], which shows a full state of the conduit. It will be seen in Fig. 12 from the fact that in the range where the flow Q is substantially larger than 100[$m^3$/h] the curves OA and OB have straight line segments which will pass through the origin of the coordinates that the flowmeter operates as a regular so-called full-fluid type electromagnetic flowmeter.

Data on the relationship shown in Fig. 12 and 13 is stored in memory 100 of CPU 9.

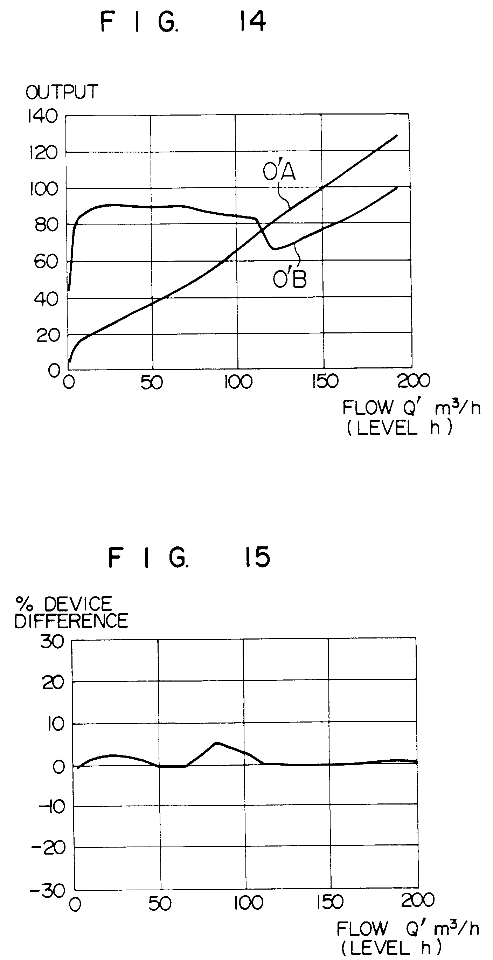

Fig. 14 shows the relationship between the actual flow Q'[$m^3$/h] measured by changing the gradient of the conduit 13 to 6/1000 and the outputs OA', OB' obtained by energizing coils 3A and 3B, respectively, in the device of Fig. 11. While the actual flow is known in this experiment in Fig. 14, the unknown flow Q' is obtained from the above correcting method if OB'/OA'= $\alpha$ is calculated by assuming the actual flow Q' [$m^3$/h] as being unknown; a flow Q$\alpha$ is obtained

which is the value of OB/OA of Fig. 13 which corresponds to $\alpha$, and the sensitivity OA/Q$\alpha$ is calculated from the curve OA in Fig. 12.

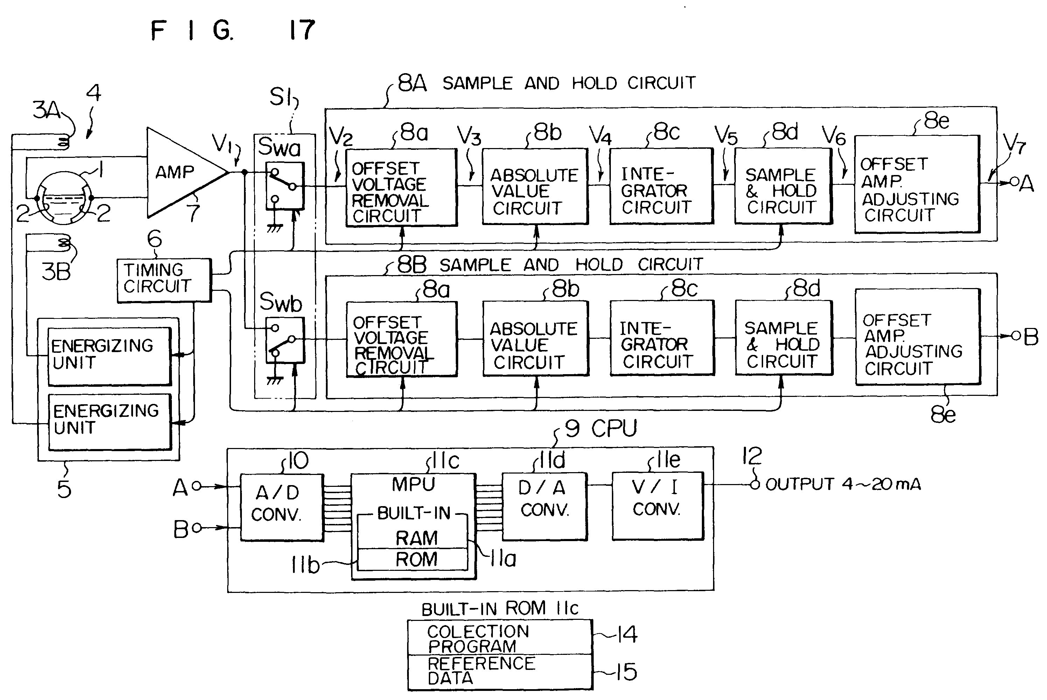

The operation of the CPU 9 for obtaining the unknown flow Q' will be described below with reference to the flow chart of Fig. 16.

CPU 9 stores in registers (not shown) data on the outputs OA' and OB' from sensor electrodes 2 delivered from sample and hold circuits 8A, 8B and obtained when the upper and lower coils 3A and 3B, respectively, are energized. At step 1 a correction calculating circuit 11 reads out the respective outputs OB' and OA' from the corresponding registers and calculates a ratio OB'/OA'. At step 2 the circuit 11 determines whether the conduit is full with a flowing fluid or not. When OB'/OA' is equal to the value T of the straight line of Fig. 13, the circuit determines that the conduit is full with the fluid and control passes to step 11. If OB'/OA' is larger than T, the circuit 11 determines that the conduit is not full, and control passes to step 3, where the circuit 11 determines a flow Q$\alpha$ flowing through the reference conduit in accordance with the relationship of Fig. 13 stored in the memory 100.

At step 5 an output OA$\alpha$ corresponding to flow Q$\alpha$ is calculated on the basis of the relationship of the curve OA of Fig. 12 stored in the memory 100, and the calculating circuit 11 calculates k = OA$\alpha$/Q$\alpha$.

At step 7 the calculating circuit 11 again reads output OA' from the register and multiplies the output OA' by the sensitivity k obtained at the preceding step to determine a measured flow Q', and then outputs it (step 9).

When it is determined at step 2 that the conduit is full with the fluid, the electromagnetic flowmeter of this embodiment operates as a full-fluid type one (step 11). More specifically, it multiplies output OA' by the sensitivity k present when the conduit is full or at an level of 1.0D. The sensitivity is obtained beforehand.

Of course, the flow of the fluid when the conduit is full with the fluid can be obtained also at steps 3-9.

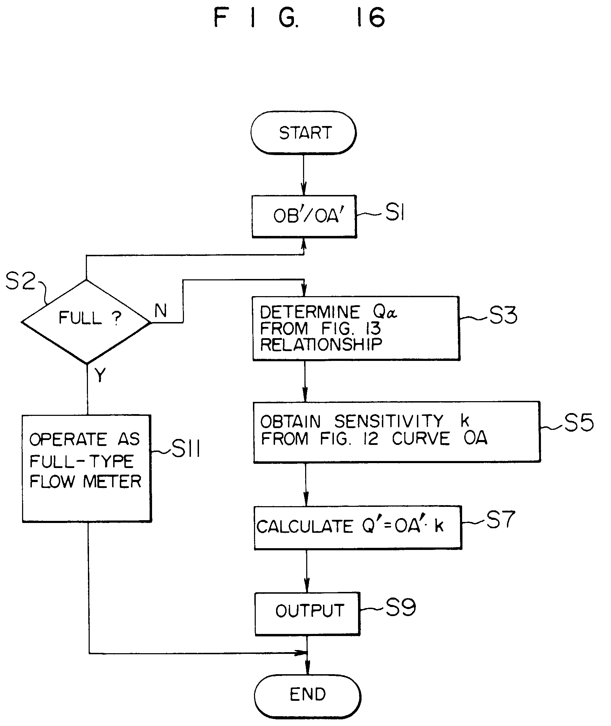

When device differences were sought at several points of flows Q', it was found that they were relatively small values as shown in Fig. 15 to thereby confirm the practicality of this measuring method. The device difference implies the difference in output value between a standard flowmeter and the electromagnetic flowmeter of the present embodiment.

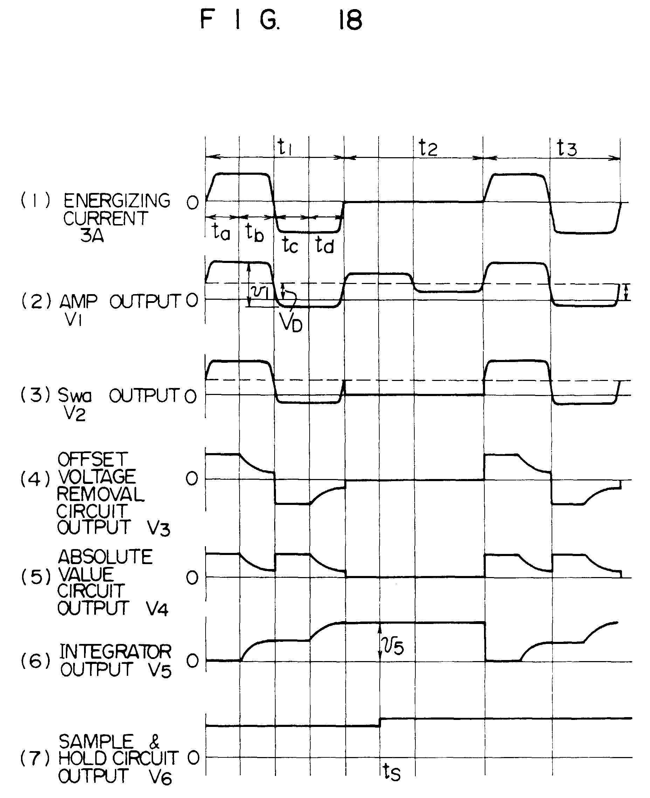

Fig. 17 shows a second embodiment of the electromagnetic flowmeter of the present invention. It additionally has modified details of the energizing circuit 5, changeover switch S1, first and second sample and hold circuits 8A, 8B and CPU 9 of Fig. 9.

The energizing circuit 5 is provided with two energizing units which energize the energizing coils 3A and 3B alternately in accordance with the signal from the timing circuit 6.

The changeover switch S1 is composed of changeover switches Swa and Swb. When one changeover switch, for example, Swa, supplies the output signal from amplifier 7 to the first sample and hold circuit 8A, the other changeover switch Swb grounds the input b to the second sample and hold circuit 8B.

The first and second sample and hold circuit 8A and 8B have the same structural details and are each composed of an offset voltage removal unit 8a, absolute value unit 8b, integrator 8c, sample and hold circuit 8d and an offset and amplification degree adjusting unit 8e.

Reference characters A and B denote the corresponding output terminals for the first and second sample and hold circuits 8A and 8B.

CPU 9 is composed of an A/D converter 10, microprocessor unit 11c which is provided with built-in RAM 11a and ROM 11b, D/A converter 11d and V/I converter 11e.

The built-in ROM 11c stores a correction program 14 and correction reference data 15, to be described later in more detail.

CPU 9 outputs an analog flow signal of 4-20mA at its output 12.

This operation of the second embodiment of Fig. 17 will be described below. The two energizing units of the energizing circuit 5 operate alternately to supply energizing currents alternately to the energizing coils 3A and 3B.

An electromotive force generated across the electrodes 2 is delivered to the amplifier 7, whose output is supplied alternately to the first and second sample and hold circuits 8A, 8B through the changeover switches Swa and Swb depending on which of the energizing coils 3A, 3B is energized.

Since the basic operations of the circuits 8A, 8B are exactly the same, the operation of the first sample and hold circuit 8A will be described as an example.

The following description is made on the basis of the timing chart of Fig. 18. (1), (2),...denote the timing chart numbers.

(1) The energizing current flowing through the energizing coil 3A flows intermittently as shown. The energizing coil 3A is energized for the intervals of time t1, t3,...(for the other intervals of time t2,..., the other energizing coil 3B is energized.)

(2) The output voltage V1 from the amplifier 7 is as shown at this time. It is known that a direct offset $V_D$ is superimposed inevitably.

(3) The output from the amplifier 7 are for the intervals of time t1, t3,...are supplied through the changeover switch Swa to the first sample and hold circuit 8A. For the interval of time t2, the input to the sample and hold circuit 8A is grounded through the changeover switch Swa.

(4) First, the signal is delivered to the offset voltage removal unit 8a. The removal circuit 8a operates for only sub-intervals of time tb and td of the interval of time t1 to thereby result in a voltage waveform such as is shown because the integrated value of the input voltage is subtracted from the input voltage.

(5) The output V3 from the offset voltage removal unit 8a is input to the absolute value circuit 8b to invert minus portions of the output for the intervals tc, td to thereby provide an output V4.

(6) The outputs V4 from the absolute value circuit 8b is integrated by the integrator 8c for the intervals of time tb, td. Of course, the voltage V5 obtained finally corresponds to the amplitude V1 of the output from the amplitude 7 in (2).

(7) The voltage V5 is sampled and held by the sample and hold circuit 8d at timing ts to thereby provide an output V6.

Thereafter, the output V6 is output as an output voltage V7 to the output terminal A through the offset and amplification degree adjusting unit 8e. The output voltage V7 corresponds to the output OA or OA'.

Similarly, the output voltage supplied to the output terminal B of the second sample and hold circuit 8B corresponds to the output OA or OB'.

CPU 9 operates as follows. CPU 9 operates in timing independently of the sample and hold circuits 8A and 8B. Synchronization of both the circuits 8A and 8B improves efficiency, but is not necessarily required.

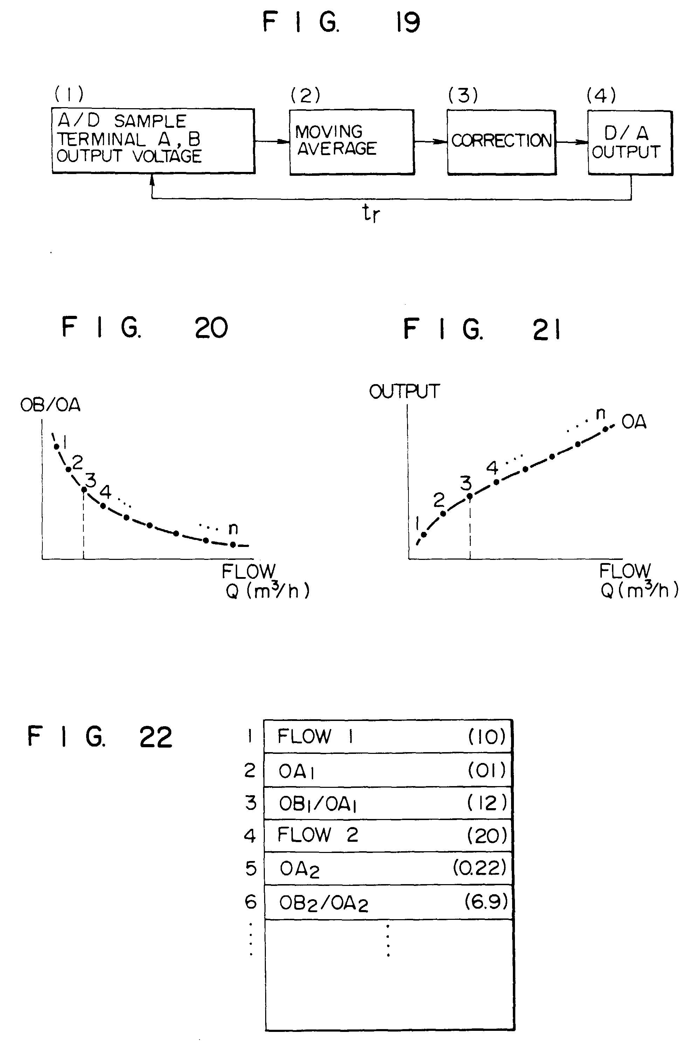

Fig. 19 shows the flow of the operation of CPU 9 and repeats the processing at steps (1)-(4) as shown at intervals of time tr.

The voltage outputs at the output terminals A and B of the first and second sample and hold circuits 8A, 8B are updated at intervals of time (t1 + t2) as will be obvious from the timing chart of Fig. 18, so that decreasing the period tr compared to the interval of time (t1 + t2) implies taking the same output more than once, which is an ineffective operation.

If tr = (t1 + t2) in that sense, all the data from the sample and hold circuits 8A, 8B are taken.

The operation of CPU 9 will be described in detail with reference to the flowchart of Fig. 19.

Procedures (1): The outputs at the output terminals A and B of the sample and hold circuits 8A, 8B are A/D sampled by the A/D converter 10. It is assumed at this time that the unknown flow Q' is already measured and that the outputs at the output terminals A and B correspond to the outputs O'A and O'B, respectively.

Procedure (2) for moving average processing: Noise is contained in outputs O'A and O'B. In the present invention, complicated correction such as taking an output ratio O'B/O'A is made, so that it is preferable to eliminate noise to some extent and then to resort to the correction procedures.

Otherwise, an error due to noise may be amplified during the correction procedures.

In order to noise, various methods would be considered. As an example, a moving average is taken, in which the last n A/D sampled data values obtained so far are partially updated at each sampling and stored in a memory and the arithmetic mean value of those data is used in the subsequent correction.

Procedures (3) for correction: The procedures for correction described in detail in the explanation of the correction will be described.

First, data corresponding to Figs. 1 and 2A are taken from the outputs OA and OB measured beforehand for every several flows Q at a given gradient of the conduit and are beforehand recorded as correction reference data 15 in ROM 11b of Fig. 17.

These data are obtained by actual measurement. First, the inventive electromagnetic flowmeter is attached to a conduit with a given gradient. By controlling the flow using a reference meter while measuring outputs OA, OB, data on Table 1 below is obtained.

Table 1

| No. | Reference flow (m³/h) | Output OA (V) | Output OB(V) |
|-----|-----------------------|---------------|--------------|
| 1 | 10 | 0.10 | 1.20 |
| 2 | 20 | 0.22 | 1.52 |
| 3 | 30 | 0.35 | 1.89 |
| 4 | 40 | 0.48 | 1.98 |
| . | . | . | . |
| . | . | . | . |
| . | . | . | . |

As shown in Figs. 20 and 21, the coordinates of points 1, 2, 3, 4,..., n shown by dots are obtained on the curves of Figs. 1 and 2 A.

Data for the coordinates of these dots are arranged and stored as correction reference data 15 (Fig. 17) on ROM 11b, as shown in Fig. 22.

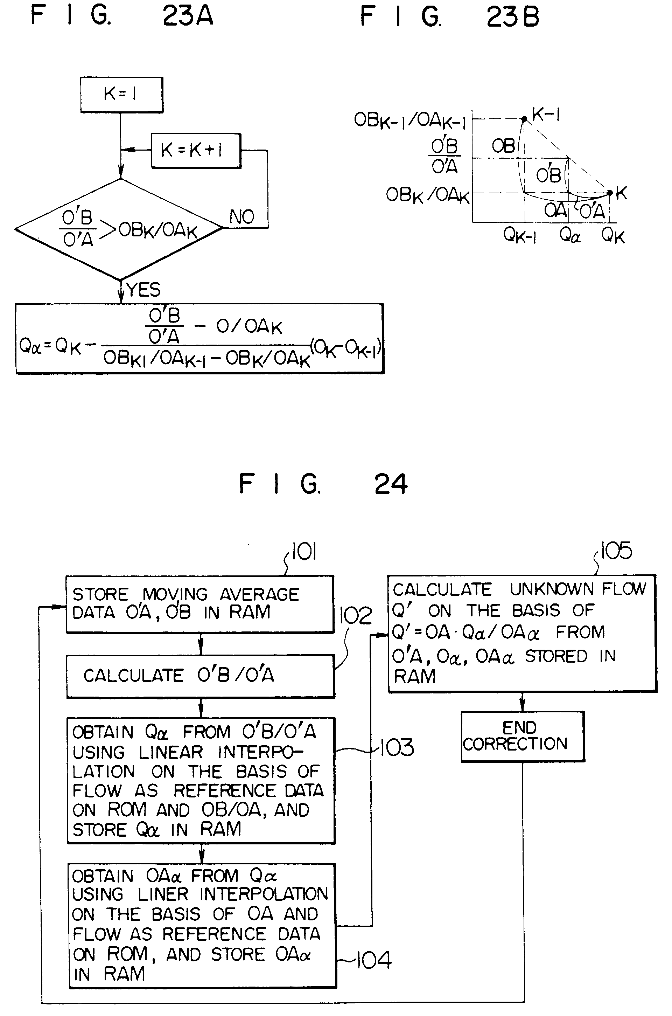

In order to perform correction procedures, the curves of Figs. 1 and 2A are required to be reproduced approximately from data on the coordinates by linear interpolation (which includes connection of dots by straight line segments). Fig. 23A shows one example of an algorithm which performs the correction procedures by linear interpolation.

Fig. 23 is a flowchart indicative of an algorithm which obtains a flow $Q\alpha$ from the output ratio O'B/O'A. In this case, it assumed that reference data at several points are already recorded on the built-in ROM 11b.

Let the kth flow and the output ratio OB/OA at that time be $Q_k$ and $OB_k/OA_k$, respectively.

When the answer is YES at a determining step for $O'B/O'A > OB_k/OA_k$ in the flowchart of Fig. 23A, the coordinates are in the positional relationship as shown in Fig. 23B.

The final processing expression of Fig. 23A is obtained from the relationship OA/OB = O'A/O'B.

The basic flow of the proper correction procedures are steps 101-105 of Fig. 24, the details of which will be obvious from the above description. The correction program 14 for this processing is beforehand stored in the built-in ROM 11b of Fig. 17.

In Fig. 17, the RAM 11a and ROM 11b are not necessarily required to be built in the microprocessor 11c, but may be provided outside the microprocessor 11c.

Procedure (4): The result of the correction is converted by the D/A converter 11d to an analog value, which is then converted by a V/I converter 11e to an analog current output of 4-20mA.

When the device differences were obtained at several points of flows Q', using this method, relatively small values as shown in Fig. 15 were obtained to thereby confirm the practicality of this measuring method.

According to the present invention, different magnetic flux density distributions BA and BB were generated by using a flowmeter which is substantially the same in function as the known electromagnetic flowmeters and using the two energizing coils selectively. The flow in the non-full state was also measured by correction on the basis of the outputs OA and OB which were obtained from the magnetic densities BA and BB.

Thus, the structure of the hardware is not especially complicated compared to the conventional electromagnetic flowmeter. In addition, direct level measurement is not required, so that the flow measurement is not adversely affected by waves and voids on a surface of the flow of the fluid. Like the conventional well-known electromagnetic flowmeters, the inventive flowmeter causes no damage to the conduit.

According to the inventive flowmeter, the flow can be measured with high accuracy without being adversely affected by a gradient of the conduit. Furthermore, the flow can be measured with high accuracy in the full fluid state like the conventional full-fluid type electromagnetic flowmeter.

While the present invention has been described in detail, it should be understood that various changes, substitutions and alternations can be made hereto without departing from the scope of the present invention as defined by the appended claims.

## Claims

1. An electromagnetic flow sensor (4) for a flowmeter for measuring the flow rate of a measurement fluid, comprising a measuring conduit of substantially circular cross-section; an upper coil (3A) disposed above the measuring conduit (1); a lower coil (3B) disposed below the measuring conduit; means (5) for selectively energising one of said upper and lower coils; sensor means (2) comprising a pair of electrodes attached to the conduit wall and providing a respective electrical signal OA or OB representative of the voltage induced as a result of fluid flowing through the magnetic field produced by said upper coil or said lower coil, respectively, when energised, each of which electrodes comprises a first portion extending upward from the horizontal axis of conduit and a second portion extending downward from the horizontal axis; characterised in that the said second portion is longer than the first portion; and the angle ($\alpha$(U)) subtended by said first portion at the central axis of the conduit is 30 to 40 degrees.

2. A flow sensor according to claim 1, which is arranged to be usable with a conduit that is either completely or partially filled with the liquid; whereby a ratio OA/OB, OB/OA, OB/(OA+OB), OA(OA+OB), (OA+OB)/OA or (OA+OB)/OB is substantially in a one-to-one relationship to the flow rate of said fluid flowing in said conduit.

3. A flow sensor according to claim 1 or claim 2, wherein said angle ($\alpha$(U)) subtended by said first portion is substantially 35°.

4. A flow sensor according to any one of claims 1 to 3, wherein the angle ($\alpha$(L)) subtended by said second portion at the central axis of the conduit is 50-60 degrees.

5. A flow sensor according to claim 4, wherein said angle ($\alpha(L)$) subtended by said second portion is substantially 55°.

6. A flow sensor according to any one of claims 1 to 5, wherein said electrodes (2) are attached to an inner surface of said conduit (1).

7. An electromagnetic flow meter which comprises a flow sensor according to any one of claims 1 to 6.

8. A method of measuring the flow rate of a measurement fluid flowing through a measuring conduit having a substantially circular cross-section, comprising: producing a magnetic field by selectively energising one of an upper coil (3A) disposed above the measuring conduit (1) and a lower coil (3B) disposed below the measuring conduit; obtaining with sensor means (2) comprising a pair of electrodes attached to the conduit wall a respective electrical measurement signal OA or OB representative of the voltage induced as a result of fluid flowing through the magnetic field produced by said upper coil or said lower coil, respectively, when energised, each of which electrodes comprises a first portion extending upward from the horizontal axis of conduit and a second portion extending downward from the horizontal axis; characterised by using electrodes with the said second portion longer than the first portion; the angle ($\alpha(U)$) subtended at the central axis of the conduit by said first portion of which is 30 to 40 degrees.

9. A method according to claim 8, wherein the conduit may be either completely or partially filled with the liquid; and wherein a ratio OA/OB, OB/OA, OB/(OA+OB), OA(OA+OB), (OA+OB)/OA or (OA+OB)/OB is substantially in a one-to-one relationship to the flow rate of said fluid flowing in said conduit.

10. A method according to claim 8 or claim 9, wherein said angle ($\alpha(L)$) subtended by said first portion is substantially 35°.

11. A method according to any one of claims 8 to 10, wherein said angle ($\alpha(L)$) subtended by said second portion at the central axis of the conduit is 50-60 degrees.

12. A method according to claim 11, wherein said angle ($\alpha(L)$) subtended by said second portion is substantially 55°.

**Patentansprüche**

1. Elektromagnetischer Strömungsfühler (4) für einen Durchflußmesser zum Messen der Strömungsgeschwindigkeit bzw. des Strömungsdurchsatzes eines Meßströmungsmittels, mit einer Meßleitung mit im wesentlichen kreisförmigem Querschnitt; einer oberen Spule (3A), die oberhalb der Meßleitung (1) angeordnet ist; einer unteren Spule (3B), die unterhalb der Meßleitung angeordnet ist; Mitteln (5) zum selektiven Erregen einer der genannten oberen und unteren Spule; Fühlermitteln (2) mit einem Paar Elektroden, die an der Leitungswand angebracht sind und für ein jeweiliges elektrisches Signal OA oder OB sorgen, das repräsentativ ist für die Spannung, die als Ergebnis des Strömungsmittels induziert wird, das durch das Magnetfeld strömt, das von der genannten oberen Spule bzw. unteren Spule im Fall der Erregung erzeugt wird, wobei jede dieser Elektroden einen ersten Abschnitt aufweist, der sich von der horizontalen Achse der Leitung nach oben erstreckt, und einen zweiten Abschnitt, der sich von der horizontalen Achse nach unten erstreckt; dadurch **gekennzeichnet**, daß der genannte zweite Abschnitt länger ist als der erste Abschnitt; und daß der Winkel ($\alpha(U)$), der vom ersten Abschnitt an der Mittelachse der Leitung überspannt wird, 30 bis 40° beträgt.

2. Strömungsfühler nach Anspruch 1, der dazu eingerichtet ist, mit einer Leitung benutzbar zu sein, die entweder vollständig oder teilweise mit der Flüssigkeit gefüllt ist; wobei ein Verhältnis OA/OB, OB/OA, OB/(OA+OB), OA(OA+OB), (OA+OB)OA oder (OA+OB)/OB im wesentlichen in einem 1:1-Verhältnis zur Strömungsgeschwindigkeit bzw. zum Strömungsdurchsatz des genannten Strömungsmittels liegt, das in der genannten Leitung strömt.

3. Strömungsfühler nach Anspruch 1 oder Anspruch 2, worin der genannte Winkel ($\alpha(U)$), der vom genannten ersten Abschnitt überspannt wird, im wesentlichen 35° beträgt.

4. Strömungsfühler nach irgendeinem der Ansprüche 1 bis 3, worin der Winkel ($\alpha(L)$), der vom genannten zweiten Abschnitt an der Mittelachse der Leitung überspannt wird, 50 bis 60° beträgt.

# EP 0 547 751 B1

5. Strömungsfühler nach Anspruch 4, worin der genannte Winkel ($\alpha$(L)), der vom genannten zweiten Abschnitt überspannt wird, im wesentlichen 55° beträgt.

6. Strömungsfühler nach irgendeinem der Ansprüche 1 bis 5, worin die genannten Elektroden (2) an einer Innenfläche der genannten Leitung (1) angebracht sind.

7. Elektromagnetischer Durchflußmesser, der einen Strömungsfühler nach irgendeinem der Ansprüche 1 bis 6 aufweist.

8. Verfahren zum Messen der Strömungsgeschwindigkeit bzw. des Durchsatzes eines Meßströmungsmittels, das durch eine Meßleitung strömt, die einen im wesentlichen kreisförmigen Querschnitt aufweist, mit den folgenden Schritten:
Erzeugen eines Magnetfelds durch selektives Erregen einer oberen Spule (3A), die oberhalb der Meßleitung (1) angeordnet ist, und einer unteren Spule (3B), die unterhalb der Meßleitung angeordnet ist; Erzielen eines jeweiligen elektrischen Meßsignals OA oder OB mit Fühlermitteln (2), die ein Paar Elektroden aufweisen, die an der Leitungswand angebracht sind, wobei das Meßsignal repräsentativ ist für die Spannung, die als Ergebnis des Strömungsmittels induziert wird, das durch das Magnetfeld strömt, das von der genannten oberen Spule bzw. der genannten unteren Spule im Fall der Erregung erzeugt wird, wobei jede dieser Elektroden einen ersten Abschnitt aufweist, der sich von der horizontalen Achse der Leitung nach oben erstreckt, und einen zweiten Abschnitt, der sich von der horizontalen Achse nach unten erstreckt; **gekennzeichnet** durch die Verwendung von Elektroden, bei denen der genannte zweite Abschnitt länger ist als der erste Abschnitt; wobei der Winkel ($\alpha$(U)), der an der Mittelachse der Leitung vom genannten ersten Abschnitt hiervon überspannt wird, 30 bis 40° beträgt.

9. Verfahren nach Anspruch 8, worin die Leitung entweder vollständig oder teilweise mit der Flüssigkeit gefüllt ist und worin ein Verhältnis OA/OB, OB/OA, OB/(OA+OB), OA(OA+OB), (OA+OB)OA oder (OA+OB)/OB im wesentlichen in einem 1:1-Verhältnis zur Strömungsgeschwindigkeit bzw. zum Strömungsdurchsatz des genannten Strömungsmittels liegt, das in der genannten Leitung strömt.

10. Verfahren nach Anspruch 8 oder Anspruch 9, worin der genannte Winkel ($\alpha$(L)), der vom genannten ersten Abschnitt überspannt wird, im wesentlichen 35° beträgt.

11. Verfahren nach irgendeinem der Ansprüche 8 bis 10, worin der genannte Winkel ($\alpha$(L)), der vom genannten zweiten Abschnitt an der Mittelachse der Leitung überspannt wird, 50 bis 60° beträgt.

12. Verfahren nach Anspruch 11, worin der genannte Winkel ($\alpha$(L)), der vom genannten zweiten Abschnitt überspannt wird, im wesentlichen 55° beträgt.

## Revendications

1. Détecteur de débit électromagnétique (4) pour débitmètre permettant de mesurer le débit d'un fluide de mesure, comprenant une canalisation de mesure de coupe sensiblement circulaire ; une bobine supérieure (3A) placée au-dessus de la canalisation de mesure (1) ; une bobine inférieure (3B) placée en dessous de la canalisation de mesure ; des moyens (5) permettant d'exciter, de manière sélective, l'une desdites bobines supérieure et inférieure des moyens de détection (2) comprenant une paire d'électrodes fixées sur la paroi de la canalisation et fournissant un signal électrique respectif OA ou OB, représentatif de la tension induite par la circulation du fluide à travers le champ magnétique produit par ladite bobine supérieure ou ladite bobine inférieure, respectivement, lorsqu'elles sont excitées, chacune desdites électrodes comprenant une première partie qui se prolonge vers le haut à partir de l'axe horizontal de la canalisation et une seconde partie qui se prolonge vers le bas, à partir de l'axe horizontal ; caractérisé en ce que ladite seconde partie est plus longue que la première partie ; et en ce que l'angle ($\alpha$(U)) sous-tendu par ladite première partie au niveau de l'axe central de la canalisation est de 30 à 40 degrés.

2. Détecteur de débit selon la revendication 1 agencé pour pouvoir être utilisé avec une canalisation qui est remplie soit en partie, soit en totalité du liquide, grâce à quoi un rapport OA/OB, OB/OA, OB/(OA + OB), OA/(OA + OB), (OA + OB)/OA ou (OA + OB)/OB constitue une relation sensiblement égale à un sur un par rapport au débit dudit fluide qui circule dans ladite canalisation.

3. Détecteur de débit selon la revendication 1 ou la revendication 2, dans lequel ledit angle ($\alpha$(U)) sous-tendu par

10

ladite première partie est sensiblement de 35°.

4. Détecteur de débit selon l'une quelconque des revendications 1 à 3, dans lequel l'angle ($\alpha$(L)) sous-tendu par ladite seconde partie au niveau de l'axe central de la canalisation est de 50-60 degrés.

5. Détecteur de débit selon la revendication 4, dans lequel ledit angle ($\alpha$(L)) sous-tendu par ladite seconde partie est sensiblement de 55°.

6. Détecteur de débit selon l'une quelconque des revendications 1 à 5, dans lequel lesdites électrodes (2) sont fixées à une surface interne de ladite canalisation (1).

7. Débitmètre électromagnétique qui comprend un détecteur de débit selon l'une quelconque des revendications 1 à 6.

8. Procédé permettant de mesurer le débit d'un fluide de mesure qui circule dans une canalisation de mesure de coupe sensiblement circulaire, comprenant : la production d'un champ magnétique en excitant, de manière sélective, une bobine parmi une bobine supérieure (3A) placée au-dessus de la canalisation de mesure (1) et une bobine inférieure (3B) placée en dessous de la canalisation de mesure ; l'obtention, grâce à des moyens de détection (2) comprenant une paire d'électrodes fixées sur la paroi de la canalisation, d'un signal électrique de mesure respectif OA ou OB, représentatif de la tension induite par la circulation du fluide à travers le champ magnétique produit par ladite bobine supérieure ou ladite bobine inférieure, respectivement, lorsqu'elles sont excitées, chacune desdites électrodes comprenant une première partie qui se prolonge vers le haut à partir de l'axe horizontal de la canalisation et une seconde partie qui se prolonge vers le bas, à partir de l'axe horizontal ; caractérisé en ce qu'on utilise des électrodes dont la seconde partie est plus longue que la première partie ; et en ce que l'angle ($\alpha$(U)) sous-tendu par ladite première partie au niveau de l'axe central de la canalisation est de 30 à 40 degrés.

9. Procédé selon la revendication 8, dans lequel la canalisation peut être remplie, soit en partie, soit en totalité du liquide, et dans lequel un rapport OA/OB, OB/OA, OB/(OA + OB), OA/(OA + OB), (OA + OB)/OA ou (OA + OB)/OB constitue une relation sensiblement égale à un sur un par rapport au débit dudit fluide qui circule dans ladite canalisation.

10. Procédé selon la revendication 8 ou la revendication 9, dans lequel ledit angle ($\alpha$(L)) sous-tendu par ladite première partie est sensiblement de 35°.

11. Procédé selon l'une quelconque des revendications 8 à 10, dans lequel ledit angle ($\alpha$(L)) sous-tendu par ladite seconde partie au niveau de l'axe central de la canalisation est de 50-60 degrés.

12. Procédé selon la revendication 11, dans lequel ledit angle ($\alpha$(L)) sous-tendu par ladite seconde partie est sensiblement de 55°.

F I G.    1

OUTPUT

OA

OB

OA(h')

0.2  h'  0.5          0.9    LEVEL (h) [/D]
16  Q    77          164    FLOW (Q) [m³/h]

k(h')

F I G.    2A

K(h)=OB/OA

K(h)=OB/OA

O'B/O'A

0.2 h'  0.5          0.9    LEVEL (h)

# F I G. 2B

OA/OB

h

# F I G. 2C

OB/OA+OB

h

F I G. 2D

OA / OA + OB

h

F I G. 2E

OA + OB / OB

h

F I G. 2F

OA+OB / OA

h

F I G. 3

F I G. 4

3A ⊗    ⊗ 3A

L

2    2

1

OUTPUT OA

0.5D  0.01⁰/₀₀ ~ 1.0⁰/₀₀

k

24    77

FLOW Q
[ m³/h ]

# F I G. 5

# F I G. 6A    F I G. 6B    F I G. 6C

LEVEL: 0.2D     LEVEL: 0.5D     LEVEL: 0.9D

FIG. 7

FIG. 8A

FIG. 8B

# F I G. 9

# F I G. IO

TIMING CIRCUIT

EXCITING CURRENT 3A

EXCITING CURRENT 3B

CHANGE-OVER SWITCH SI — a-SIDE / b-SIDE

AMPLIFIER OUTPUT 7

S/H a-SIDE INPUT

S/H b-SIDE INPUT

EP 0 547 751 B1

# FIG. 11

BUFFER TANK

4

13

TO PIT

FLOW ADJUSTING VALVE

MASS METER

PUMP

FROM PIT

EP 0 547 751 B1

# F I G. 12

# F I G. 13

F I G. 14

F I G. 15

F I G. 16

```
                        ┌──────────┐
                        │  START   │
                        └────┬─────┘
                             │
                             ▼
                        ┌──────────┐
                        │ OB'/OA'  │──── S1
                        └────┬─────┘
              ┌──────────────┤
              │              │
      S2      ▼              │
         ╱─────────╲         │        ┌─────────────────────┐
        ╱           ╲   N    │        │ DETERMINE Qα        │──── S3
       ╱   FULL ?    ╲───────┴───────▶│ FROM  FIG. 13       │
        ╲           ╱                 │ RELATIONSHIP        │
         ╲─────────╱                  └──────────┬──────────┘
              │ Y                                 │
              │                                   ▼
              ▼                       ┌─────────────────────┐
   ┌──────────────────┐              │ OBTAIN  SENSITIVITY k │──── S5
   │ OPERATE  AS      │──── S11      │ FROM FIG. 12  CURVE OA│
   │ FULL-TYPE        │              └──────────┬──────────┘
   │ FLOW METER       │                         │
   └────────┬─────────┘                         ▼
            │                       ┌─────────────────────┐
            │                       │ CALCULATE Q'=OA'·k  │──── S7
            │                       └──────────┬──────────┘
            │                                  │
            │                                  ▼
            │                       ┌──────────┐
            │                       │  OUTPUT  │──── S9
            │                       └────┬─────┘
            │                            │
            └──────────────────────────▶│
                                         ▼
                                    ┌──────────┐
                                    │   END    │
                                    └──────────┘
```

F I G. 17

8A SAMPLE AND HOLD CIRCUIT

8B SAMPLE AND HOLD CIRCUIT

9 CPU

BUILT-IN ROM 11c

EP 0 547 751 B1

# F I G. 18

# F I G. 19

| (1) | | (2) | (3) | (4) |
|---|---|---|---|---|
| A/D SAMPLE TERMINAL A , B OUTPUT VOLTAGE | → | MOVING AVERAGE | CORRECTION | D/A OUTPUT |

$t_r$

# F I G. 20

OB/OA

1
2
3 4 ...
... n

FLOW Q ($m^3/h$)

# F I G. 21

OUTPUT

... n OA
4 ...
2 3
1

FLOW Q ($m^3/h$)

# F I G. 22

| | | |
|---|---|---|
| 1 | FLOW 1 | (10) |
| 2 | $OA_1$ | (01) |
| 3 | $OB_1/OA_1$ | (12) |
| 4 | FLOW 2 | (20) |
| 5 | $OA_2$ | (0.22) |
| 6 | $OB_2/OA_2$ | (6.9) |
| ⋮ | ⋮ | |

# F I G. 23A

# F I G. 23B

# F I G. 24